# FASCICULE DE BREVET EUROPEEN

(11) **EP 3 247 220 B1**
(45) Date de publication et mention de la délivrance du brevet: **22.04.2020**
(21) Numéro de dépôt: 16700997.6
(22) Date de dépôt: 19.01.2016
(51) Int. Cl.: A23J 3/26

(54) **PRODUIT ALIMENTAIRE EXPANSE SEC A BASE DE PROTEINE ET SON PROCEDE DE FABRICATION**
AUF EXPANDIERTEM TROCKENPROTEIN BASIERENDES LEBENSMITTELPRODUKT UND VERFAHREN ZUR HERSTELLUNG DAVON
EXPANDED DRY PROTEIN-BASED FOOD PRODUCT AND METHOD FOR PRODUCING SAME

(30) Priorité: 23.01.2015 BE 201500055
(43) Date de publication de la demande: 29.11.2017
(73) Titulaire: Proteifood S.A., 7850 Enghien (BE)
(72) Inventeur: SNAPPE, Jean-Jacques, 62149 Festubert (FR); OLIVIER, Pierre, 1180 Bruxelles (BE)
(74) Mandataire: Argyma
(86) Numéro de dépôt international: PCT/EP2016/050981
(87) Numéro de publication internationale: WO 2016/116426

(56) Documents cités:
- WO-A2-2010/082053
- US-A- 3 891 774
- US-A1- 2005 089 623
- US-A1- 2006 210 695
- US-A1- 2010 221 396

## Description

### Domaine de l'invention

La présente invention se rapporte à un produit alimentaire expansé sec à base de protéine pour l'alimentation humaine ou animale et à un procédé pour sa fabrication. Plus particulièrement l'invention se rapporte à un produit alimentaire expansé sec de type biscuit ou flocon ou gaufrette, notamment un produit croustillant nutritionnel à basses calories et à bonnes propriétés organoleptiques, pouvant être consommé tel quel à l'état sec ou bien en mélange avec un liquide comestible tel que du lait ou de l'eau. En particulier, l'invention se rapporte à un produit alimentaire de type biscuit ou flocon ou gaufrette à longue conservation, sans farine de céréale, mais offrant à la fois l'apport en protéines (en particulier pour les produits nutritionnels) et l'apport en sels minéraux, notamment en calcium, magnésium, phosphore et fer, nécessaire aux enfants, adultes, sportifs et personnes âgées. La présente invention se rapporte également à un procédé économique et efficace pour la fabrication d'un tel produit alimentaire expansé sec.

### Arrière-plan de l'invention

Des biscuits hyperprotéinés, par exemple à base de farine de blé, farine de lupin, protéines de soja, gluten de blé, et le cas échéant gomme d'acacia, poudre levante, etc., sont bien connus dans les régimes d'amincissement pour alimentation humaine pour permettre la combustion des graisses et la perte de poids tout en prévenant la fonte de la masse musculaire. Dans ce contexte, on connaît aussi divers biscuits, gâteaux, crêpes à base de protéines de lactosérum. Toutefois, à défaut d'un procédé de fabrication efficace et flexible à grande échelle, de tels biscuits ont le plus souvent un cout de fabrication et, par conséquent, un prix de vente trop élevé pour une large part de la population. Par ailleurs, il est aussi largement reconnu que, dans ce type de produit alimentaire sec destiné à la consommation humaine et après un entraînement physique ou sportif, le caractère croustillant est souvent obtenu au détriment des propriétés organoleptiques.

Malgré leur intérêt potentiel pour le secteur des biscuits secs, les protéines de lait, sous forme d'isolats ou de concentrés, n'y trouvent encore qu'un faible débouché pour les produits diététiques pour l'alimentation humaine, par comparaison à la production de fromages frais, yaourts, boissons, glaces, sauces, laits infantiles, et pour l'alimentation animale.

Par ailleurs, des biscuits expansés secs sont déjà connus pour l'alimentation des animaux domestiques tels que chiens et chats, ainsi que des chevaux.

Le brevet américain n° 3.891.774 se rapporte à la production par extrusion, à partir d'une source de protéines telle que farine animale, farine de volaille, farine de graines oléagineuses et de préférence farine de soja, d'un produit alimentaire sec simulant la viande et qui peut être réhydraté en l'espace de quelques secondes sans chauffage. La source de protéines a une teneur en eau à l'équilibre de 4% à 12% en poids et une teneur en protéines de 30% à 75% en poids. Le facteur crucial du procédé est l'ajout, à un niveau entre 10 et 50% en poids, d'un solvant organique (glycérol, propylène glycol ou un mélange de ceux-ci) capable de plastifier la source de protéine dans l'extrudeuse. Globalement le procédé comprend en outre les étapes consistant à chauffer le mélange à une température supérieure à 100°C, appliquer des pressions élevées pendant un temps suffisant pour convertir le mélange en une substance capable d'écoulement, forcer le matériau à travers un premier orifice restreint, le maintenir à température et pression élevées tandis qu'il émerge dudit premier orifice restreint, puis extruder le matériau à travers un second orifice restreint dans un environnement de pression substantiellement inférieure aux dites pressions élevées pour causer l'expansion du produit avec évaporation d'au moins une partie de l'humidité et la formation d'un produit alimentaire sec expansé ayant une teneur en eau résiduelle de 3% à 7% en poids lorsqu'il sort de l'extrudeuse. Ce document ne divulgue la présence ni de matière grasse de qualité alimentaire ni d'additif texturant.

La demande de brevet américain publiée n° 2005/089623 divulgue un produit alimentaire de densité comprise entre 0,02 et 0,5 g/cc comprenant une protéine pouvant être au moins partiellement hydrolysée en proportion de 25% à 95% en poids, et de l'eau en proportion de 1% à 7% en poids. Le produit peut comprendre une charge, dont la majorité peut être de l'amidon, en proportion de moins de 50% en poids, et peut comprendre un revêtement de surface à base de graisse. L'amidon préféré est de la farine de riz, de l'amidon de pomme de terre et du tapioca, ou leurs mélanges. Cependant, avant extrusion du produit, on préfère maintenir la proportion de graisse ajoutée au mélange de composants solides et d'eau à un niveau inférieur à 0,5% en poids.

Malgré l'exposé précédent de la technique antérieure, il existe encore un besoin dans la technique alimentaire pour des produits expansés croustillants à caractère diététique à base de protéines, en particulier des produits alimentaires croustillants à très faibles teneurs en amidon et en graisse, offrant une grande variété de goûts possibles, salés ou sucrés, en fonction des préférences des consommateurs. Il existe aussi un besoin dans la technique alimentaire pour des produits expansés croustillants à base de protéines d'origines variées, animales et/ou végétales, permettant de s'adapter à la fois à la disponibilité des ressources agricoles locales et aux préférences diététiques des consommateurs, par exemple en matière de régimes végétariens. Il existe aussi un besoin pour des produits croustillants de type biscuits pour l'alimentation animale, notamment pour les animaux domestiques de compagnie. Il existe aussi un besoin dans la technique alimentaire pour un procédé de fabrication de tels produits expansés croustillants, qui soit économique et efficace et qui offre à faible coût une grande flexibilité en fonction des types de protéines utilisables comme matières de départ, en fonction des qualités organoleptiques des produits désirés et en fonction du type d'alimentation, humaine ou animale, visé.

### Résumé de l'invention

Il a été trouvé de manière surprenante que les besoins exprimés ci-avant dans la technique alimentaire humaine et animale, ainsi que les problèmes diététiques mentionnés ci-dessus pouvaient être avantageusement résolus au moyen de:
- une composition de matière améliorée de produit alimentaire expansé sec, telle que définie par la revendication 1 dans son expression la plus large, et dans chacune des revendications 2 à 12 concernant des modes particuliers de réalisation;
- une composition de matière d'un précurseur thermo-expansible capable de former ledit produit alimentaire expansé sec, telle que définie par la revendication 13,
- un procédé de préparation d'un précurseur alimentaire thermo-expansible tel que défini par la revendication 14, et
- un procédé de fabrication de produit alimentaire expansé sec, tel que défini par la revendication 15.

### Description détaillée de l'invention

Un premier aspect de l'invention concerne donc un produit alimentaire expansé sec comprenant au moins les ingrédients suivants:
- un concentré protéique d'origine animale ou végétale, de qualité alimentaire,
- une matière grasse de qualité alimentaire,
- un additif texturant de qualité alimentaire choisi parmi le groupe constitué des hydrocolloïdes et gélifiants végétaux, l'amidon de préférence chimiquement modifié, les additifs protéolytiques et leurs produits d'hydrolyse, et les agents acidifiants et leurs sels, et
- de l'eau résiduelle,
caractérisé en ce que le rapport en poids de la matière grasse de qualité alimentaire à l'eau est de 5/1 à 3/1.
Tel qu'exprimé ici, il faut comprendre que :
- la matière grasse de qualité alimentaire constitue un ingrédient distinct du, c'est-à-dire distinctement ajouté au, concentré protéique de qualité alimentaire, et non pas une impureté non-protéique de celui-ci ;
- la matière grasse de qualité alimentaire constitue un ingrédient en mélange avec le concentré protéique de qualité alimentaire, et non pas un revêtement de surface de celui-ci.
Facultativement, le produit alimentaire expansé sec selon l'invention peut comprendre:
- un sel de qualité alimentaire dérivé d'un agent acidifiant organique ou minéral, mais de préférence autre qu'un phosphate ou citrate, et/ou
- un additif protéolytique, ou son produit d'hydrolyse.
De préférence, le produit alimentaire expansé sec selon l'invention ne comprend pas d'ingrédients, autres que ceux énumérés ci-dessus, participant à sa définition structurelle. Toutefois il peut comprendre des additifs auxiliaires à caractère gustatif tels qu'arômes, colorants, et/ou édulcorants.

Par "concentré protéique d'origine animale", on entend toute origine autre qu'humaine ou végétale. Ainsi il pourrait s'agir d'un concentré provenant d'insectes.

Par "produit sec" au sens de la présente invention, on entend un produit dont la teneur résiduelle en eau permet de conserver intactes les propriétés gustatives et organoleptiques d'origine pendant une durée de plusieurs mois, de préférence une durée de 2 à 30 mois, sans qu'il soit besoin de stocker le produit dans des conditions de réfrigération habituelle des aliments (température inférieure à 5°C environ). Cette propriété de conservation de la qualité gustative et organoleptique correspond en général à une teneur résiduelle en eau inférieure à 10% en poids environ, par exemple ne dépassant pas 9% environ en poids, ou 8% environ en poids, mais le plus souvent d'au moins 3% environ en poids, par exemple d'au moins 4%, d'au moins 5%, d'au moins 6% ou d'au moins 7% en poids. L'homme du métier sait qu'il n'est pas souhaitable, à la fois du point de vue du coût de fabrication croissant lié à l'élimination de l'eau, et du point de vue de la conservation du produit pendant une période de stockage prolongée, de diminuer la teneur résiduelle en eau dans le produit alimentaire en dessous de 3% environ en poids. A l'inverse, une teneur résiduelle en eau supérieure à 10% en poids ne permet plus, en règle générale, de qualifier le produit alimentaire comme un produit sec. Il va de soi, quelle que soit la nature de l'emballage dans lequel il est conditionné, et malgré une teneur résiduelle en eau ainsi sélectionnée, que la bonne conservation du produit expansé sec selon l'invention dans le temps ne peut être assurée si le produit est maintenu durablement à une température supérieure à 25°C. Il est naturellement toujours conseillé de stocker le produit expansé sec, quel que soit l'emballage employé pour son conditionnement, dans un endroit frais et sec, c'est à dire dans un local à air conditionné maintenu entre 10°C et 20°C environ en moyenne et à un degré d'hygrométrie contrôlé.

Par "produit expansé" au sens de la présente invention on entend un produit alvéolé dont les alvéoles remplis d'air représentent au moins 50% du volume du produit, le cas échéant au moins 65% du volume, ou au moins 80% du volume, et même jusqu'à 85% du volume. Cette structure expansée confère au produit selon l'invention un caractère croustillant apprécié du consommateur qui peut être quantifié, si besoin est, notamment par la mesure de la force de rupture (exprimée en N).

Le produit expansé sec du premier aspect de l'invention n'est pas un produit de boulangerie industrielle traditionnelle, en majorité à base de farine de céréale (70% en poids de farine de blé dans le cas des crackers disponibles sur le marché) et donc contenant de grandes quantités de l'amidon inhérent à une telle farine. Sa composition comprend des ingrédients essentiels, tous de qualité alimentaire, tels que précisés ci-dessus et dans chacune des revendications annexées. Par ingrédients essentiels on entend des ingrédients représentant tous ensemble au moins environ 96% du poids du produit, de préférence au moins 98% du poids du produit, et encore plus préférentiellement au moins 99% du poids du produit. Ces proportions s'entendent relativement au produit expansé sec brut, c'est-à-dire avant l'application de tout revêtement ou nappage alimentaire à sa surface. Le complément à 100% en poids est constitué, le cas échéant, d'ingrédients facultatifs tels qu'édulcorants, colorants, et aromatisants comme détaillé ci-après.

Par "qualité alimentaire", on entend, pour chaque ingrédient, une qualité satisfaisant aux normes nationales et internationales en vigueur en matière sanitaire pour l'alimentation humaine ou animale, concernant notamment la pureté des ingrédients et leur non-contamination par des agents physiques, chimiques ou biologiques potentiellement dangereux.

Comme pour les produits de biscuiterie industrielle traditionnelle, le produit expansé sec selon l'invention peut, pour des besoins commerciaux liés à son aspect visuel et au goût du consommateur, être recouvert, enrobé ou nappé au moyen d'une ou plusieurs couches de revêtement de qualité alimentaire bien connues dans la technique, de nature et en quantité propres à ne pas pour autant altérer ses qualités diététiques, gustatives et organoleptiques principales.

Par "concentré protéique" utilisable pour le produit expansé sec et le procédé de fabrication selon l'invention, on entend une matière première très majoritairement, ou essentiellement, constituée de protéines d'origine naturelle (animale ou végétale), et donc exempte des constituants principaux non-azotés habituellement rencontrés dans les farines de céréales (environ 70% en poids d'amidon dans les farines de blé) ou les farines animales. Le "concentré protéique" présent dans le produit alimentaire expansé sec selon l'invention est donc une préparation extraite d'une matière première d'origine naturelle (animale ou végétale), et dans laquelle les composants non protéiques ont été éliminés pour l'essentiel, en ayant recours à une ou plusieurs des techniques bien connues de fractionnement, précipitation, extraction, séparation, isolement, purification, etc. En fonction de la teneur pondérale en protéine par rapport à la matière sèche du concentré protéique, et donc en fonction du procédé d'obtention du concentré protéique, le terme "concentré protéique" s'entend comme comprenant aussi les "isolats protéiques" ayant une teneur pondérale en protéine (par rapport à la matière sèche) d'au moins 85% en poids. Dans la mesure de leur disponibilité commerciale, on préfère des concentrés protéiques ou isolats protéiques substantiellement anhydres ou à teneur résiduelle en eau contrôlée et réduite.

De nombreux concentrés protéiques d'origine naturelle (animale ou végétale) appropriés comme ingrédients pour le produit expansé sec et pour le procédé selon l'invention sont disponibles dans le commerce. Pour les concentrés protéiques d'origine animale, on peut citer des concentrés protéiques laitiers tels que ceux extraits de lait de vache, de chèvre, de jument, de bufflesse, de brebis, etc. Leur composition est détaillée ci-après concernant un mode de réalisation particulier de la présente invention.
La composition de base du produit alimentaire expansé sec selon le premier aspect de l'invention décrit ci-dessus comprend des ingrédients essentiels, dont un additif texturant qui peut être de l'amidon natif (d'origine botanique) ajouté, de préférence de l'amidon modifié ajouté, seul ou en mélange avec d'autres additifs texturants (tels que définis ci-après). Tel qu'exprimé ici, il faut comprendre que l'amidon constitue un ingrédient distinct des, c'est-à-dire distinctement ajouté aux, autres ingrédients essentiels (concentré protéique, matière grasse), et non pas (cas de l'amidon natif notamment) une impureté de ceux-ci. L'homme du métier connait bien l'amidon modifié par modification physique (par exemple précuisson sur cylindre, en extrusion, ou en tour d'atomisation), physico-chimique (par exemple dextrination à haute température et à pH extrême), biologique (par exemple hydrolyse contrôlée par un système enzymatique) ou chimique (par exemple réticulation ou substitution) d'amidon natif d'origine botanique par une variété de techniques bien connues, afin de modifier à souhait la structure chimique de l'un ou l'autre de ses deux homopolymères constituants (amylose et amylopectine) et par conséquent une ou plusieurs de ses propriétés physiques telles que la stabilité à la chaleur ou au cisaillement, la viscosité, la visco-stabilité, le temps de gélatinisation, etc. Toutes ces formes d'amidon modifié entrent dans le cadre de la présente invention. Des exemples non limitatifs d'amidons modifiés de qualité alimentaire sont repris par le Système international de numérotation des additifs alimentaires (SIN) et en particulier sont ceux modifiés par la dextrine, un hydroxyde alcalin, l'hypochlorite de sodium, les maltodextrines et cyclodextrines, un ou des phosphates, l'anhydride acétique, l'oxyde de propylène ou d'éthylène, des succinates, l'acide monochloroacétique, et sont commercialement disponibles. Le choix du type et de la quantité d'amidon modifié seront dictés par l'effet texturant voulu pour le produit final. De préférence l'amidon (de préférence modifié) ajouté représente moins de 10% en poids, par ex. pas plus de 4,5% en poids, du produit alimentaire expansé sec (ou pas plus de 3,5% en poids des ingrédients combinés dans le procédé de fabrication du précurseur expansible décrit ci-après), afin de garantir une qualité diététique du produit expansé final qui se distingue de celle des produits commerciaux déjà connus à haute teneur en amidon.

La composition de base du produit alimentaire expansé selon l'invention peut en particulier comprendre au moins un concentré protéique animal (par exemple laitier ou de poisson) ou végétal. Comme concentrés protéiques laitiers on peut citer ceux contenant des caséines, des protéines sériques ou solubles, et/ou des extraits de celles-ci (par exemple bêta-lactoglobuline, alpha-lactalbumine, immunoglobulines, lactoferrine, etc). Pour plus de détails quant aux composants possibles d'un concentré protéique laitier, on se réfèrera à l'article de J.J. Snappe et alia intitulé "Protéines laitières" paru dans Dossier Techniques de l'Ingénieur (juin 2010).

Comme concentré protéique d'origine animale on peut encore citer des concentrés extraits de farines de poisson, dont il existe de nombreux exemples commerciaux, ou de vers de terre (*Eisenia foetida*).

Comme concentré protéique d'origine végétale, on peut citer, mais de façon non limitative, des concentrés de protéines végétales telles que des protéines issues de plantes légumineuses (soja, pois, lupin, lentilles, fèves, haricots), de céréales (blé, avoine, maïs, millet, orge, seigle, sarrasin, riz, épeautre, sésame), de graines oléagineuses (courge, lin, arachide, citrouille) ou de fruits oléagineux (amandes, cacahuètes, pistaches, noisettes, noix), ou des extraits de ceux-ci.

Comme concentré protéique originaire d'insectes on peut citer, mais de façon non limitative, des concentrés de protéines extraits de farines d'insectes du commerce telles que, mais sans limitation à, des farines de sauterelles, de charançons, de chenilles, de vers à soie, de criquets (*Locusta migrator* et *Gryllus bimaculatus*)*.*

Etant donné la variété de concentrés protéiques utilisables pour le procédé et le produit alimentaire expansé sec selon l'invention, il est facile d'adapter la production à la disponibilité locale tout en réalisant toute la gamme des produits alimentaires expansés secs désirés en fonction des caractéristiques du marché local.

La teneur en protéines du concentré protéique animal (par exemple laitier ou de poisson) ou végétal est très élevée, supérieure à 65% en poids, de préférence supérieure à 75% en poids, de préférence supérieure à 80% en poids, et même, dans le cas des isolats protéiques, supérieure à 85% en poids. Le complément à 100% en poids est habituellement constitué d'eau (de préférence au plus 5% en poids environ) et d'impuretés inertes pouvant avoir une utilité nutritionnelle (par exemple sels minéraux tels que calcium, carbohydrates, vitamines) dans des proportions ne nuisant pas à la qualité alimentaire ni aux qualités gustatives, diététiques et/ou organoleptiques des produits alimentaires expansés secs selon l'invention.

La forme physique du concentré protéique utilisable pour le procédé et le produit expansé sec selon l'invention n'est pas une caractéristique particulièrement limitative de la présente invention; toutefois une forme de poudre avec une granulométrie contrôlée et régulière est évidemment préférable, notamment pour la miscibilité avec les autres ingrédients principaux. Des gammes de granulométries souhaitables pour la mise en œuvre de l'invention dépendent de la source de protéines utilisée et de la disponibilité commerciale, mais sont en général comprises entre environ 30 et 200 µm, de préférence entre 50 et 150 µm, selon l'origine, animale (par ex. laitière ou de poisson) ou végétale, du concentré protéique.

La composition de base utilisable pour le produit alimentaire expansé sec et le procédé selon l'invention comprend en outre, comme ingrédient essentiel de départ, de la matière grasse de qualité alimentaire. On préfère une matière grasse capable d'être émulsionnée sans difficulté avec au moins une partie, de préférence la majeure partie ou la totalité, du concentré protéique animal (par exemple laitier ou de poisson) ou végétal. Comme matière grasse, on peut donc utiliser, mais sans limitation, de la matière grasse laitière anhydre, du beurre, de la crème liquide ou en poudre, ou de la matière grasse végétale de qualité alimentaire ou, sous réserve de miscibilité, leur mélange. Selon un mode de réalisation particulier de la présente invention, on préfère une matière grasse permettant, en une quantité appropriée, d'obtenir une émulsion de type huile dans l'eau en présence du concentré protéique d'origine animale ou végétale.

De manière conventionnelle, on entend par matière grasse laitière anhydre le produit obtenu par séparation à partir de la crème ou du beurre, puis déshydratation, sans ajout d'additif. De la matière grasse laitière anhydre utilisable présente donc habituellement une humidité maximale de 0,1% en poids, une teneur maximale de 0,5% en poids en composés liposolubles et une acidité oléique maximale de 0,3%. Elle peut être fabriquée à partir du beurre ou de crème après action mécanique et/ou thermique, centrifugation et séchage sous vide. On peut aussi utiliser une fraction particulière de matière grasse laitière anhydre obtenue par exemple par cristallisation fractionnée.

En tant que matière grasse végétale de qualité alimentaire, on peut utiliser de préférence une matière grasse végétale ayant un point de fusion au moins égal à 25°C, tel que par exemple un point de fusion de 30°C à 40°C environ. A titre d'exemples non limitatifs on peut citer des margarines, hydrogénées ou non hydrogénées, à base de coprah, palme, colza, soja, tournesol ou d'une autre espèce végétale courante.

La forme physique de la matière grasse utilisée n'est pas particulièrement limitée, toutefois des caractéristiques assurant une bonne miscibilité, en présence d'eau, avec le concentré protéique animal ou végétal sont avantageuses du point de vue de la production du produit alimentaire expansé sec selon l'invention, en particulier du point de vue de l'efficacité à réaliser l'étape initiale de son procédé de fabrication. Par exemple, mais de manière non limitative, dans un mode de réalisation avec un concentré protéique laitier on peut utiliser au choix une matière grasse laitière anhydre ou bien une matière grasse végétale de qualité alimentaire, ou bien un mélange des deux.

Les proportions de l'eau, de la matière grasse et du concentré protéique animal (par exemple laitier ou de poisson) ou végétal dans la composition de base (y compris le précurseur thermo-expansible décrit ci-après) pour le produit alimentaire expansé sec de l'invention et l'étape initiale du procédé selon l'invention peuvent varier dans de larges limites à la condition d'être capable fournir un mélange sensiblement homogène, mais peuvent être aisément déterminées par l'homme de métier en fonction de paramètres techniques tels que le choix de la matière grasse et du concentré protéique, les propriétés diététiques et nutritionnelles désirées pour le produit alimentaire final, la capacité d'expansion et le caractère croustillant désirés, et de paramètres économiques tels que la durée du processus de fabrication (en particulier l'étape de maturation) et le prix de revient. Ces proportions sont ajustées par l'homme du métier de manière à pouvoir réaliser aisément, dans l'étape initiale de production, l'émulsion de la matière grasse avec une partie, de préférence la totalité, des protéines, ainsi que l'hydratation du concentré protéique animal (par exemple laitier ou de poisson) ou végétal, tout en ajustant de manière appropriée la viscosité du mélange en vue des étapes suivantes. A cet effet, il est généralement préférable que le rapport en poids concentré protéique/eau soit compris entre environ 1/4 et 1/1, de préférence entre 1/3 et 1/2 environ. De même le rapport en poids de la matière grasse de qualité alimentaire à l'eau constitue un facteur important de l'invention, et il est en général préférable que ce rapport en poids matière grasse/eau soit compris entre environ 1/5 et 1/3, de préférence entre 1/4 et 1/5, dans le précurseur avant expansion/déshydratation. Ceci correspond en général à un rapport en poids de la matière grasse de qualité alimentaire à l'eau de 5/1 à 3/1 dans le produit expansé sec. Afin de respecter l'objectif d'un produit alimentaire croustillant diététique, la proportion de matière grasse dans la composition de base utilisable pour le produit expansé sec et l'étape initiale du procédé selon l'invention doit être maintenue aussi faible que possible. En fonction de la matière grasse choisie (origine, point de fusion, caractère hydrogéné ou non), et du concentré protéique animal (par exemple laitier ou de poisson) ou végétal choisi, l'homme du métier sait déterminer, de manière empirique, et au moyen d'un nombre limité d'essais préliminaires, les proportions d'eau, de matière grasse et du concentré protéique les mieux adaptées pour réaliser l'étape initiale du procédé selon l'invention sans difficulté tout en garantissant la condition diététique et nutritionnelle du produit expansé sec final.

La composition utilisable pour le produit alimentaire expansé sec et le procédé de fabrication selon l'invention comprend l'ajout, alternativement à l'amidon de préférence modifié décrit ci-dessus, d'au moins un agent ou additif texturant tel qu'un hydrocolloïde, un épaississant, un émulsifiant, un gélifiant, un additif protéolytique ou son produit d'hydrolyse, un agent acidifiant ou l'un de ses sels. De préférence on choisit un hydrocolloïde autre que la gélatine. Comme exemples non limitatifs de texturants utilisables on peut citer notamment des agents d'origine végétale tels que l'acide alginique; les alginates de sodium, de potassium, d'ammonium, de calcium et de propylène glycol; des carraghénanes (kappa et iota); les gommes de caroube, d'avoine, de guar; la gomme arabique, la gomme adragante, la gomme xanthane, la gomme karaya, la gomme tara, la gomme gellane, la gomme ghatti, le mannitol, et la carboxyméthylcellulose sodique, ou le mélange de plusieurs d'entre eux. Le type d'agent texturant (par exemple hydrocolloïde) ajouté dépend, de façon connue de l'homme du métier, de l'augmentation de la viscosité désirée et du type de texture désirée pour le produit alimentaire expansé sec final. La proportion d'agent texturant (par exemple hydrocolloïde) ajouté est une quantité suffisante pour obtenir l'effet texturant désiré pour le produit expansé final, en fonction du type d'agent texturant choisi. Elle est habituellement comprise entre environ 0,3% et environ 10% en poids, de préférence entre 0,4% et 4% en poids du produit alimentaire expansé sec selon l'invention.

La composition utilisable pour le produit alimentaire expansé sec selon le premier aspect de l'invention peut comprendre au moins un agent protéolytique, ou un produit d'hydrolyse de celui-ci, destiné à couper au moins une partie, de préférence une majeure partie ou la totalité, des protéines présentes dans le concentré protéique en fragments de protéines de plus petite taille, cette coupure ayant pour effet de modifier la texture. Un agent protéolytique préféré est donc une enzyme d'origine animale, végétale ou microbienne de la catégorie des protéases, en particulier des exo- et endopeptidases dont la coupure implique l'emploi d'une molécule d'eau, ou bien des exopeptidases. Le choix de cet agent protéolytique, et de sa quantité efficace, dépend, de manière bien connue de l'homme du métier, des protéines présentes dans le concentré protéique utilisé. Selon un mode de réalisation particulier de l'invention, lorsque le concentré de protéine de qualité alimentaire est un concentré de protéine de lait, un additif protéolytique approprié est constitué de présure ou d'une protéase (endopeptidase) naturelle extraite de la présure, telle que la chymosine. On peut aussi utiliser de la chymosine synthétique pure obtenue par fermentation d'un organisme (par ex. un champignon tel *qu'Aspergillus niger)* génétiquement modifié. Comme autres additifs protéolytiques appropriés on peut citer d'une part la pepsine et d'autre part des enzymes actives d'origine végétale telles que la cyprosine et la cardosine. La quantité efficace d'agent protéolytique, ou l'un de ses produits d'hydrolyse, est habituellement très faible, de l'ordre de 20 à 200 ppm, et cet agent se retrouve donc à l'état de traces dans le produit alimentaire expansé sec selon l'invention.

La composition utilisable pour le produit alimentaire expansé sec selon le premier aspect de l'invention peut aussi comprendre au moins un sel d'agent acidifiant, ou bien un précurseur de celui-ci, de préférence autre qu'un citrate ou phosphate. L'agent acidifiant en question peut être un acide fort ou faible (tel que défini par son pKa de manière bien connue de l'homme du métier), minéral ou organique. A titre d'exemple non limitatif on peut citer l'acide sulfurique, l'acide gluconique, etc. Le sel ou précurseur d'agent acidifiant doit être de qualité acceptable pour l'alimentation humaine ou animale. Un sel d'agent acidifiant utilisable, en particulier lorsque le concentré de protéine de qualité alimentaire est un concentré de protéine de soja, est le sulfate de calcium. Un sel d'agent acidifiant utilisable, en particulier lorsque le concentré de protéine de qualité alimentaire est un concentré de protéine de lait, est un gluconate ou bien un précurseur additif alimentaire tel que la delta-gluconolactone (additif E575). Un ferment lactique ou autre organisme vivant capable d'acidifier le milieu est également utilisable. Une quantité appropriée de sel d'agent acidifiant, ou bien de précurseur de celui-ci, est une quantité nécessaire et suffisante pour procéder à l'acidification du milieu pendant la coupure d'au moins une partie, de préférence une majeure partie ou la totalité, des protéines présentes dans le concentré protéique en fragments de protéines de plus petite taille. Chaque additif peut participer ainsi à la coagulation du mélange en milieu acide, par exemple en déstabilisant les protéines, en particulier les caséines.

La composition du produit alimentaire expansé sec selon l'invention peut comprendre en outre un ou plusieurs additifs auxiliaires de fabrication tels que définis ci-dessous, afin de conférer au produit des propriétés nutritionnelles (fibres) ou gustatives (arômes, colorants, édulcorants) désirables.

Un produit expansé sec selon l'invention, ne comprenant pas de sel de qualité alimentaire dérivé d'un agent acidifiant, et/ou d'additif protéolytique ou produit d'hydrolyse de celui-ci, présente aussi une très bonne capacité d'expansion, mais un caractère croustillant moins prononcé.

Pour la fabrication d'un produit alimentaire expansé sec selon l'invention, il est en général utile, mais pas nécessairement, de disposer d'un précurseur thermo-expansible capable de former le produit par simple expansion à la chaleur avec réduction de la teneur en eau, par exemple par traitement au moyen de micro-ondes, ou tout autre traitement approprié bien connu dans l'industrie alimentaire. Un tel précurseur thermo-expansible constitue donc un autre aspect de l'invention, et il comprend au moins les ingrédients suivants:
- un concentré protéique d'origine animale ou végétale, de qualité alimentaire,
- une matière grasse de qualité alimentaire,
- un additif texturant de qualité alimentaire choisi parmi le groupe constitué des hydrocolloïdes et gélifiants végétaux, l'amidon de préférence modifié, les additifs protéolytiques et leurs produits d'hydrolyse, et les agents acidifiants et leurs sels, à la condition que l'amidon de préférence modifié représente moins de 5% en poids du précurseur, et
- de l'eau.

Le précurseur thermo-expansible selon l'invention peut comprendre en outre un sel de qualité alimentaire dérivé d'un agent acidifiant, de préférence autre qu'un citrate ou phosphate, et/ou un additif protéolytique ou un produit d'hydrolyse de celui-ci. Chacun des ingrédients de ce précurseur peuvent être de nature et en quantité telles que définies ci-dessus au sujet du produit alimentaire expansé sec. Etant donné que le traitement thermique du précurseur thermo-expansible aura pour effet, simultanément avec l'expansion en volume, de réduire la teneur en eau jusqu'au niveau d'une teneur résiduelle compatible avec des exigences de conservation de longue durée à température ambiante (environ 15°C à 25°C), il va de soi que la teneur en eau dans la composition du précurseur thermo-expansible selon l'invention dépasse 10% en poids. Une teneur appropriée en eau dans la composition du précurseur thermo-expansible selon l'invention dépend du nombre et des proportions respectives des autres ingrédients essentiels et, le cas échéant, de la présence d'ingrédients facultatifs tels que le sel de qualité alimentaire dérivé d'un agent acidifiant, et/ou l'additif protéolytique ou son produit d'hydrolyse. Elle dépend aussi de la nécessité de produire un mélange substantiellement homogène avec les autres ingrédients essentiels et des conditions de viscosité à réaliser pour une manipulation aisée du mélange en fonction des conditions de température choisies pour le procédé de préparation (voir ci-après). La série d'exemples fournie ci-après démontre qu'une teneur appropriée en eau dans la composition du précurseur thermo-expansible selon l'invention est en général comprise dans une gamme de 50% à 85% en poids de tous les ingrédients pris ensemble.

Un procédé illustratif mais non limitatif de préparation du précurseur thermo-expansible comprend les étapes consistant à:
- combiner, à une température comprise entre 4°C et 60°C, le concentré protéique d'origine animale ou végétale, la matière grasse de qualité alimentaire, l'additif texturant de qualité alimentaire et l'eau, et
- soumettre le mélange obtenu à un traitement thermique dans une gamme de température comprise entre 65°C et 140°C.
Le cas échéant le procédé de préparation peut comprendre au moins une étape supplémentaire consistant en l'ajout d'un sel de qualité alimentaire dérivé d'un agent acidifiant, de préférence autre qu'un citrate ou phosphate, et/ou d'un additif protéolytique ou un produit d'hydrolyse de celui-ci. L'homme du métier sait déterminer, par des essais de simple routine, à la fois le type d'appareil dans lequel réaliser la combinaison initiale (y compris les moyens d'agitation éventuels) et, le cas échéant, le moment approprié pour l'ajout des ingrédients facultatifs, en fonction notamment de leur stabilité thermique et leur réactivité avec les ingrédients essentiels.

Enfin un autre aspect de l'invention concerne un procédé de fabrication d'un produit alimentaire expansé sec tel que défini en premier lieu, comprenant les étapes du procédé de préparation du précurseur thermo-expansible, et comprenant en outre l'étape consistant à soumettre le précurseur thermo-expansible à la chaleur, par exemple au moyen de micro-ondes, jusqu'à provoquer son expansion selon le degré d'expansion désiré, et la réduction de la teneur en eau jusqu'à la teneur résiduelle désirée.

Les définitions de procédé ci-dessus ne comprennent que les étapes essentielles à l'accomplissement du but de l'invention. Il va de soi pour l'homme du métier que des étapes intermédiaires facultatives, telles que maturation, moulage, démoulage, broyage, râpage, déshydratation partielle, peuvent être ajoutées pour faciliter le processus aboutissant au produit expansé final sous la forme désirée, en particulier en lui procurant une texture souhaitable. On expose ci-après, à titre non-limitatif, un mode de réalisation particulier d'un procédé de fabrication d'un produit alimentaire expansé sec comprenant de telles étapes intermédiaires. Ce procédé comprend à titre seulement illustratif au moins les étapes suivantes:
(a) mélanger jusqu'à homogénéisation une composition de base comprenant comme ingrédients essentiels de l'eau, de la matière grasse de qualité alimentaire, au moins un concentré protéique d'origine animale ou végétale de qualité alimentaire, et au moins un additif texturant de qualité alimentaire choisi parmi les hydrocolloïdes et gélifiants végétaux et l'amidon, et le cas échéant comme ingrédients facultatifs un sel de qualité alimentaire dérivé d'un agent acidifiant, autre qu'un citrate ou phosphate, et/ou un additif protéolytique ou un produit d'hydrolyse de celui-ci.
(b) soumettre le mélange homogène obtenu à l'étape (a) à un traitement thermique par chauffage jusqu'à une température comprise entre 65°C et 140°C environ, suivi d'un refroidissement jusqu'à une température ne dépassant pas 50°C maximum,
(c) le cas échéant ajouter, pendant ou après le refroidissement de l'étape (b), au moins un additif protéolytique ou un produit d'hydrolyse de celui-ci et au moins un agent acidifiant ou un précurseur ou un sel de celui-ci, et homogénéiser le mélange résultant,
(d) verser le mélange homogène obtenu à l'étape (c) dans un moule,
(e) laisser le mélange homogène prendre de la texture dans le moule à une température comprise entre 5°C et 65°C pendant une durée suffisante pour procéder à sa texturation,
(f) le cas échéant broyer ou râper, le cas échéant après une déshydratation partielle pour abaisser sa teneur en eau jusqu'à une valeur comprise entre 25% et 40% en poids, le mélange coagulé obtenu à l'étape (e) afin d'ajuster sa granulométrie dans une gamme prédéterminée, et
(g) soumettre le mélange le cas échéant broyé ou râpé, et le cas échéant partiellement déshydraté, obtenu à l'étape (e) ou à l'étape (f), à un traitement par micro-ondes pour procéder à son expansion et sa déshydratation, jusqu'à obtenir ledit produit alimentaire expansé sec possédant le ratio d'expansion et la teneur résiduelle en eau requis.

L'étape (a) du procédé selon l'invention consiste à homogénéiser les composants de la composition de base. Ceci est effectué, de préférence dans un mélangeur émulsionneur solide-liquide bien connu dans l'industrie alimentaire, à une température suffisante et en procurant une agitation suffisante, pour que l'homogénéisation soit atteinte dans un temps minimum. A titre d'exemple non limitatif d'équipement utilisable pour les étapes (a), (b) et (c) du procédé selon la présente invention on peut citer notamment des mélangeurs-cuiseurs à double enveloppe pour le chauffage et le refroidissement, et à injection directe de vapeur tels que les machines universelles UMSK commercialisées par le département Stephan de la société Sympak Process Engineering GmbH (Schwarzenbek, Allemagne). Le choix du type d'équipement (forme du déflecteur de flux de matière, outil de type rotor-stator, etc.) et des paramètres de fonctionnement (sens de rotation et de contre-rotation, vitesse d'agitation, etc.) du mélangeur émulsionneur solide-liquide est à la portée de l'homme de métier, au moyen d'un nombre limité d'essais préliminaires, une fois connues les proportions respectives d'eau, de matière grasse et du concentré protéique animal ou végétal dans la composition de base. Il est préférable que la vitesse d'agitation dans le mélangeur solide-liquide soit comprise entre environ 500 et 2000 rpm, de préférence entre 800 et 1500 rpm. En cas d'utilisation d'appareils de type rotor/stator les équivalences de vitesse seront données en vitesses de cisaillement de préférence comprises entre 5000 et 20000 s⁻¹, plus préférablement entre 5000 et 10000 s⁻¹, par exemple 7500 s⁻¹ environ. De même il est préférable que le contenu du mélangeur solide-liquide soit maintenu à une température comprise entre environ 4°C et 60°C, de préférence entre environ 45°C et 60°C. La température peut être contrôlée au moyen d'une sonde, et peut être maintenue constante durant toute l'étape (a), ou bien peut être programmée selon un cycle variable si besoin est. En fonction des paramètres (par exemple la température et la vitesse d'agitation) choisis pour le fonctionnement du mélangeur solide-liquide, et de la masse de composition à homogénéiser, la durée de l'étape (a) est habituellement comprise entre environ 5 et 30 minutes, de préférence entre 10 et 20 minutes environ.

A l'issue de l'étape (a) du procédé selon l'invention on obtient une masse (par exemple pâteuse ou liquide visqueuse) homogène dans laquelle sont susceptibles d'être occluses de nombreuses bulles d'air. Pour la poursuite du procédé selon l'invention, il est préférable de procéder à la désaération de cette masse. Celà est effectué par tout moyen approprié, de préférence au moyen d'une mise sous vide de l'équipement contenant la masse homogène vers la fin de l'étape (a). De préférence on évite d'effectuer la mise sous vide au début de l'étape (a) afin d'éviter d'aspirer une partie du concentré protéique en poudre. De préférence on maintient un vide de 0,1 à 0,9 bar. A l'issue de cette étape on obtient donc une masse lisse, homogène et désaérée.

Dans une seconde étape (b), le mélange homogène et de préférence désaéré obtenu à l'étape (a) est soumis à un traitement thermique. Une gamme de température préférée pour le traitement thermique va de 65°C à 140°C environ, de préférence de 65°C à 90°C environ. Vers la fin de l'étape (b) on laisse la température de ce mélange homogène et le cas échéant désaéré diminuer jusqu'à 60°C environ au maximum, par exemple 45°C ou même 30°C environ, soit de façon naturelle par échange thermique avec le milieu environnant, soit par des moyens actifs de refroidissement appropriés, tels que circulation de fluide réfrigérant, ventilation, etc. De façon avantageuse, l'étape (b) peut être accomplie dans le même équipement, de type mélangeur-cuiseur (par exemple un équipement du constructeur Stephan précité) que celui de l'étape (a), en utilisant de façon appropriée les moyens de chauffage et refroidissement de celui-ci.

Au cours de l'étape suivante (c) on peut ajouter d'autres ingrédients facultatifs du produit alimentaire selon l'invention, à savoir au moins un additif protéolytique ou son produit d'hydrolyse et/ou un sel d'agent acidifiant ou bien un précurseur de celui-ci. La nature chimique et la quantité ajoutée de ces deux additifs a déjà été détaillée ci-dessus. Dans cette même étape (c) on peut aussi ajouter, le cas échéant, un complément d'au moins un des ingrédients essentiels du produit alimentaire selon l'invention. De façon avantageuse l'étape (c) peut être accomplie dans le même équipement de type mélangeur-cuiseur (par ex. un équipement du constructeur Stephan précité) que l'étape (a).

Au cours de l'étape (a) et/ou de l'étape (c), on peut aussi ajouter un ou plusieurs additifs auxiliaires de fabrication utiles pour améliorer un ensemble de propriétés désirables du produit expansé sec final. Parmi ces propriétés on peut citer notamment la durée de conservation, l'arôme, la couleur, le caractère croustillant, la richesse en fibres, etc. Les additifs auxiliaires de fabrication utiles à cet effet entrent dans des catégories d'additifs bien connus de l'homme du métier. Ces additifs sont normalement ajoutés en de très faibles proportions, en général inférieures à 1% en poids pour chacun d'eux, à l'exception des fibres pour lesquelles la proportion peut avantageusement atteindre jusqu'à environ 4% du produit final, en fonction de la texture et de la qualité nutritionnelle désirées.

Par exemple, on peut ajouter un ou plusieurs agents arômatisants choisis en fonction du goût à impartir au produit alimentaire expansé sec final. Pour des biscuits diététiques salés on peut ajouter des arômes, condiments ou épices en accord avec l'usage, par exemple paprika, poivre, girofle, etc. Pour des biscuits diététiques sucrés on peut ajouter des arômes naturels ou synthétiques tels que vanille, cannelle, fraise, framboise, orange, poire, pomme, etc. Selon leur nature, et selon l'intensité du goût désiré, la proportion en poids de l'agent arômatisant peut être comprise entre 0,2% et 1% en poids.

On peut également ajouter au moins une fibre, soluble ou insoluble, de qualité alimentaire. Afin de ne pas nuire au processus de fabrication ni aux autres qualités désirées du produit expansé sec final, on préfère des fibres solubles.

On peut également ajouter au moins un sel non acidifiant tel qu'un halogénure, par exemple un chlorure et/ou iodure, de sodium qui peut remplir, selon la quantité ajoutée, différentes fonctions: amélioration de la conservation, amélioration du gonflement au cours de l'étape ultérieure, modification du goût, etc. Les mêmes proportions en poids que ci-dessus s'appliquent à l'ajout de sel non acidifiant. Pour des raisons diététiques, la proportion de sel doit être aussi faible que possible, sauf si les produits expansés secs sont des biscuits apéritifs connus pour leur caractère salé.

Pendant l'étape (c) on peut également ajouter un ou plusieurs colorants acceptables pour l'alimentation humaine ou animale. De préférence, les additifs auxiliaires de fabrication sont ajoutés sous forme pulvérisée de manière à se mélanger aisément à la masse homogène désaérée de la composition de base.

Pendant l'étape (c) on peut également ajouter, dans le cas où l'on souhaite obtenir des produits finis avec une saveur sucrée, un ou plusieurs édulcorants naturels (tels que saccharose ou fructose) ou synthétiques (tels qu'aspartame ou acésulfame) en quantité suffisante bien connue de l'homme de l'art pour procurer le niveau édulcorant désiré.

Pendant l'étape (d) du procédé selon la présente invention, on verse le cas échéant le mélange obtenu de l'équipement de mélange (par exemple un mélangeur-cuiseur tel que décrit ci-dessus) dans un moule, ou tout autre support solide, de forme et dimension variables dans lequel aura lieu l'étape de maturation (e).

L'étape (e) du procédé selon la présente invention, pendant laquelle on laisse le cas échéant agir sur le mélange homogène (texturation ou, selon le cas, coagulation et acidification) le(s) constituant(s) facultatifs ajoutés à l'étape (c), peut être effectuée pendant une durée courte (par exemple de 5 à 120 minutes) ou relativement longue de quelques heures (par exemple de 2 à 24 heures environ) et à une température évitant la dénaturation des protéines ou fragments de protéines présents. Cette température maximale à ne pas dépasser dépend, de manière connue de l'homme du métier, des protéines (animales ou végétales) en question. Pour un rendement efficace de production, et donc pour éviter une durée excessive de la maturation, l'étape optionnelle (c) est effectuée à une température minimale de 5°C, de préférence au moins 15°C. Le choix de la température de l'étape (e) résulte donc d'un compromis entre rendement et nécessité d'éviter une dénaturation inappropriée qui affaiblirait la qualité nutritionnelle du produit alimentaire final.

Suit l'étape optionnelle (f) du procédé selon la présente invention, pendant laquelle on procède à un ajustement, de préférence à une réduction, de la taille moyenne des particules solides résultant de la texturation/déshydratation et, le cas échéant, à une déshydratation partielle de la masse homogène additivée. Dans cette étape, la teneur en eau de la masse homogène additivée peut être réduite significativement jusqu'à une teneur comprise entre environ 25% et 40% en poids, de préférence entre 28% et 35% en poids. La déshydratation partielle à ce stade est facultative, étant donnée qu'elle peut aussi être réalisée de manière complète à l'étape finale, sous réserve de disposer d'un équipement approprié de traitement par micro-ondes. D'autre part la taille moyenne des particules solides est diminuée par tout moyen mécanique approprié, tel que broyage ou râpage, jusqu'à une taille moyenne comprise entre environ 50 µm et 2 mm, de préférence entre environ 100 µm et 1 mm. La forme des particules obtenues à l'issue de l'étape (f) ne constitue pas un paramètre critique de la présente invention. Le terme "particule" ne sous-entend pas une forme géométrique particulière. Dans le contexte du procédé selon l'invention, toute forme, sphérique ou non, allongée ou non (par exemple des brins), peut convenir à condition de pouvoir être expansée d'un coefficient suffisant dans l'étape ultérieure (g). Selon un mode particulier de réalisation de la présente invention, le type de réduction de taille opéré vise aussi à réduire la dispersité des tailles de particules, c'est-à-dire à obtenir une population de particules de tailles aussi homogènes que possible. Cette étape (f) peut être importante en ceci que le comportement de la matière dans l'étape ultérieure de traitement par micro-ondes a été trouvé largement dépendant des paramètres tels que la teneur résiduelle en eau, la taille moyenne des particules solides, et la dispersion de leurs tailles.

Enfin, l'étape finale conduisant à l'obtention du produit alimentaire expansé sec (de type biscuit ou flocon) consiste à soumettre la pâte, déshydratée ou non, broyée ou non, obtenue à l'étape (f) à un traitement thermique tel que par micro-ondes. Ce traitement a généralement pour effet d'abaisser encore la teneur en eau dans le produit final, jusqu'à une valeur qui peut être comprise entre environ 3% et 10% en poids, compatible avec les impératifs de conservation de longue durée, tout en procédant à l'expansion de la pâte selon un rapport d'expansion (en volume) d'environ 1,5 à 6,0, par exemple de 2,0 à 3,5 environ. Les paramètres de ce traitement par micro-ondes, tels que durée, puissance, longueur d'ondes, etc, peuvent être aisément ajustés par l'homme du métier en fonction de la teneur en eau, de la taille moyenne et de la dispersion de tailles des particules de matière protéinée, ainsi que de la forme et du volume des produits finis, etc. A titre non limitatif, on peut citer les paramètres suivants:
- une fréquence d'onde variant dans la gamme usuelle des équipements micro-ondes du commerce,
- une puissance variant dans une gamme comprise entre 200 W et 1000 W environ,
- une durée variant dans une gamme comprise entre 10 et 120 secondes environ, de préférence entre 20 et 100 secondes environ.

Un produit alimentaire sec et croustillant est obtenu à l'issue de cette étape, prêt à être convoyé par bande transporteuse vers un système de conditionnement en vrac ou en sous-ensembles unitaires. Si nécessaire, à l'issue de l'étape (g) on peut prévoir un système de contrôle statistique de qualité, par exemple un système comprenant la mesure du caractère croustillant tel que par exemple la mesure de la force de rupture (en N), afin d'écarter les produits ne répondant pas à la norme fixée.

Les exemples qui suivent sont fournis à titre purement explicatif et illustratif de la présente invention et ne doivent pas être interprétés comme en limitant la portée. Ces exemples peuvent être modifiés en ajustant un ou plusieurs des paramètres opérationnels (température, durée, dimensions) à l'intérieur des gammes chiffrées mentionnées à l'un ou l'autre des paragraphes précédents.

### EXEMPLE 1

Pour cet exemple, le matériel utilisé est un Thermomix de la marque Vorwerk d'une contenance de 1,5 L. Pour réaliser la base, 27,71 g de matière grasse laitière anhydre standard (fournisseur: Corman S.A., Belgique) sont fondus dans 198 ml d'eau de source en chauffant à 50°C et sous agitation faible (Thermomix en position 1) pendant 5 minutes. Ensuite, un mélange de type poudre, contenant 75,02 g de protéines Promilk SH20 (fournisseur: Ingrédia, Arras, France) et 10,52 g d'un amidon modifié chimiquement (commercialisé sous la marque CH20/20 CLEARAM® par la société Roquette Frères, France) est ajouté sous agitation faible (position 1 du Thermomix). Le mélange est maintenu à 50°C pendant 10 minutes mais l'agitation est augmentée (position 3). Le Thermomix est ensuite réglé sur 90°C et, une fois cette température atteinte, on la maintient pendant 30 secondes (Thermomix en position 1). Le mélange est ensuite directement moulé et placé dans une chambre réfrigérée à 4°C. Après 4 heures de gélification, le produit est démoulé puis découpé en pastilles cylindriques de 18 mm de diamètre et 12 mm de hauteur qui sont directement insérées dans un déshydrateur Ultra FD 1000 de marque Ezi Dri (de la société BestBay Pty Ltd, Australie) dont la consigne de température est réglée sur 30°C, afin d'ajuster leur humidité à 20% (temps de séchage d'environ 18 heures). Les pastilles séchées sont mises dans un four micro-ondes d'une puissance de 750 W pendant 45 secondes. Le volume obtenu après passage au four micro-ondes est en moyenne de 200% par rapport au volume initial [(volume après cuisson)/(volume avant cuisson)^{∗}100%]. Le produit obtenu est croquant et croustillant et possède un gout relativement neutre. La forme obtenue après séchage est semblable à celle après cuisson.

### EXEMPLE 2

On répète la méthodologie de l'exemple 1, excepté que le texturant de type amidon modifié est remplacé par une poudre de iota-carraghénanes pour conférer à la base les propriétés d'un gel ferme et élastique. Pour cette recette, le mélange initial contient 17,89 g de matière grasse laitière anhydre standard (fournisseur Corman) et 131 ml d'eau de source. On y ajoute ensuite un mélange de 50,23 g de protéines PROMILK SH20 (fournisseur Ingrédia) et de 2,10 g de iota-carraghénanes (marque Textura, fournisseur Albert y Ferran Adria, Barcelone, Espagne). Le reste du procédé est identique à l'exemple 1, mais la différence principale réside en l'obtention d'un gel plus ferme et donc plus facilement transformable en pastilles aux dimensions désirées. L'expansion moyenne finale est aussi plus élevée et est égale à 250% [(volume après cuisson)/(volume avant cuisson)^{∗}100%]. Le produit obtenu se caractérise par une forme préservée, un alvéolage fin, et une texture croquante.

### EXEMPLE 3

On répète la méthodologie de l'exemple 1, mais les protéines laitières sont remplacées par des protéines de soja sous forme de l'isolât protéique DENA SOYA PROTEINS 90 C LES (fournisseur: Solina Group). Le texturant utilisé est du sulfate de calcium précipité (pureté de 99.9%). Pour ce mélange, 27,30 g de matière grasse laitière anhydre standard (fournisseur: Corman, Belgique) sont fondus dans 450 ml d'eau de source. Ensuite un mélange de 75,45 g de protéines de soja et de 1,0 g de sulfate de calcium est ajouté sous agitation, suivant le même procédé que pour l'exemple 1. Pour cet essai, la température de 90°C est maintenue pendant 15 minutes pour obtenir un gel par coagulation thermique. La base obtenue est facilement découpée et ne s'étale pas grâce à sa fermeté. Le gonflement résultant du traitement par micro-ondes est supérieur à 300% [volume après cuisson)/(volume avant cuisson)^{∗}100%]. Le produit obtenu est de couleur plus foncée (due aux protéines de soja), très alvéolé et croquant à la dégustation.

### EXEMPLE 4

Dans un mélangeur-cuiseur-émulsionneur, à double enveloppe pour le chauffage et le refroidissement, et à injection directe de vapeur, et de volume 24 litres commercialisé par le département Stephan de la société Sympak Process Engineering GmbH (Schwarzenbek, Allemagne) on introduit 1950g de matière grasse laitière anhydre, 8475 g d'eau, 2550 g d'isolat protéique laitier (teneur en protéines 86% en poids par rapport à la matière sèche) commercialisé par la société Ingrédia (Arras, France) sous la référence Promilk SH20, 1500g de poudre de camembert (référence 10034 de Dairygold Food Ingrédients Ltd., Irlande), 225 g d'amidon modifié de maïs de qualité alimentaire (référence CH20, fournisseur: Roquette Frères, France) et 75 g d'arôme de Gouda (référence RD60A25204 de Dairygold Food Ingrédients Ltd., Irlande). Ce mélange est homogénéisé et émulsionné (émulsion de globules huileux en suspension dans l'eau, et suspension de caséines colloïdales dans la phase aqueuse) à la température de 50°C pendant une durée de 10 minutes. Pendant toute la durée du processus d'homogénéisation, le dispositif est mis sous vide (0,5 bar) afin de désaérer substantiellement le mélange homogène obtenu. Le mélange homogène désaéré est ensuite soumis, dans le même équipement, à un traitement thermique à la température de 80°C pendant une durée de 30 secondes, puis est refroidi jusqu'à la température de 45°C. A cette température et toujours dans le même équipement, on ajoute alors 225g de l'additif alimentaire E575 (delta-gluconolactone commercialisée par la société Acros), et 1,65 ml de chymosine produite par fermentation, commercialisée par Chr. Hansen (Arpajon, France) sous la dénomination Chy-Max. Après mélange à 600 tours/minute, le mélange (représentant un poids total de 15,0 kg) est soutiré du mélangeur Stephan et versé dans des moules rectangulaires de contenance 1 litre chacun. On laisse la coagulation-acidification se produire dans les moules pendant 24 heures à la température de 20°C. Le pH mesuré à la fin de cette étape est de 5,5. A l'issue de ce temps le contenu de chaque moule est tranché en fines tranches puis soumis à un pré-séchage dans une étuve ventilée à 35°C pendant 10 heures jusqu'à atteindre une teneur en eau de 30% en poids dans le mélange coagulé pré-séché. On refroidit le produit vers 10°C de façon à augmenter sa fermeté et on procède ensuite au râpage du mélange pré-séché en fins brins (dimension longitudinale 10 à 20 mm, dimension transversale 1 à 2 mm) au moyen d'une machine Handmark avant de soumettre le mélange pré-séché râpé à un traitement d'expansion sous pression atmosphérique dans un four à micro-ondes (puissance 750 W, durée 90 secondes, à la fréquence de 2,45 GHz), dans des moules en silicone. Après démoulage, on obtient alors 7,13 kg d'un produit alimentaire expansé sec croustillant de type fromager à goût de Gouda dont la teneur résiduelle en eau mesurée est de 5,0% en poids. La composition en poids de ce produit est donc environ la suivante : 59% de protéines laitières, 28,4% de matière grasse laitière, 3,27% d'amidon de qualité alimentaire, 3,27% de gluconate, traces de présure, 1,09% d'agent aromatisant, et 5,0% d'eau.

Pour la conservation de ses propriétés gustatives et organoleptiques, il est recommandé de conditionner et stocker ce produit dans une zone sèche à hygrométrie contrôlée.

D'un point de vue nutritionnel, 100g du produit correspondant à un apport énergétique de 565 kcal.

### EXEMPLE 5

On répète le procédé de l'exemple 4 mais dans un mélangeur-cuiseur-émulsionneur de volume 5 litres et à partir des quantités suivantes d'ingrédients: 1102 g d'eau, 135 g de matière grasse laitière anhydre, 225 g d'isolat protéique laitier (teneur en protéines 85,5% en poids par rapport à la matière sèche) commercialisé par la société Ingrédia (Arras, France) sous l'appellation Promilk 852A, 15 g de l'additif alimentaire E575 (delta-gluconolactone commercialisée par la société Acros), 0,16 ml de chymosine produite par fermentation, commercialisée par Chr. Hansen (Arpajon, France) sous la dénomination Chy-Max, et 23 g d'un agent texturant hydrocolloïde végétal en poudre (au lieu de l'amidon de l'exemple 1) commercialisé sous le nom Sosa et comprenant alginate, carraghénane, et gommes de caroube et de xanthane. Après ajout de la chymosine et de E575, le produit est stocké en chambre frigorifique à 5°C pendant 4 heures jusqu'à obtenir un pH d'environ 5,0. Le bloc obtenu est alors portionné en cylindres de 18 mm de diamètre et 12 mm de hauteur, lesquels sont pré-séchés jusqu'à atteindre un taux d'humidité de 18% en poids environ, puis soumis à un traitement par micro-ondes (puissance 850 W) pendant 30 secondes sous pression atmosphérique. Après démoulage, on obtient alors 427 g d'un produit alimentaire expansé sec croustillant de type fromager dont la teneur résiduelle en eau mesurée est de 6,9% en poids. La composition en poids de ce produit est donc environ la suivante: 52,6% de protéines laitières, 31,9% de matière grasse laitière, 3,27% de texturant hydrocolloïde de qualité alimentaire, 3,5% de gluconate, des traces de présure, et 6,9% d'eau.

### EXEMPLE 6

On répète le procédé de l'exemple 4 en diminuant la quantité de chymosine à 0,36 ml mais en conservant les quantités des autres ingrédients. La capacité de tranchage du produit avant pré-séchage et râpage n'est pas affectée, et les caractéristiques d'expansion, de croustillant et du goût du produit final sont identiques à celles de l'exemple 1.

### EXEMPLE 7

On répète le procédé de l'exemple 4 mais en remplaçant la protéine laitière Promilk SH20 par une quantité identique de la protéine laitière Promilk 852A (celle utilisée à l'exemple 2). La capacité de tranchage du produit avant pré-séchage et râpage n'est pas affectée. Les caractéristiques d'expansion et du goût du produit final sont identiques à celles de l'exemple 1, mais son caractère croustillant est légèrement inférieur.

### EXEMPLE 8

On répète le procédé de l'exemple 4 mais en remplaçant 2550 g de l'isolat protéique laitier Promilk SH20 par un mélange de 2295 g de Promilk SH20 et de 255 g de fibres insolubles commercialisées par la société Cosucra (Pecq, Belgique) sous la dénomination Fibruline. La capacité de tranchage du produit avant pré-séchage et râpage n'est pas affectée, et les caractéristiques d'expansion, de croustillant et du goût du produit final sont identiques à celles de l'exemple 1, mais en raison de sa teneur d'environ 3,5% en fibres le produit expansé obtenu bénéficie de l'allégation nutritionnelle "source de fibres".

### EXEMPLE 9

On répète le procédé de l'exemple 4 mais en remplaçant 225 g d'amidon modifié de maïs par 60 g d'alginate commercialisé par la société Cargill (Minneapolis, Etats-Unis) sous la référence S550, ou bien par 60 g de carraghénane commercialisé sous la référence Carragel MCH 5311 par la société Gelymar (Santiago, Chili), ou bien par 22,5 g de gomme de caroube Viscogum Be (commercialisée par la société Cargill (Minneapolis, Etats-Unis), ou bien par 22,5 g de gomme de xanthane XGT FN commercialisée par la société Jungbunzlauer (Pernhofen, Autriche). Les caractéristiques d'expansion, de croustillant et de goût du produit final sont sensiblement identiques à celles de l'exemple 1. Ceci démontre que l'amidon peut avantageusement être remplacé, en tout ou en partie, par d'autres agents texturants hydrocolloïdes.

## Revendications

1. Produit alimentaire expansé sec comprenant au moins les ingrédients suivants:
- un concentré protéique d'origine animale ou végétale, de qualité alimentaire,
- une matière grasse de qualité alimentaire,
- un additif texturant de qualité alimentaire choisi parmi le groupe constitué des hydrocolloïdes et gélifiants végétaux, l'amidon de préférence modifié, les additifs protéolytiques et leurs produits d'hydrolyse, et les agents acidifiants et leurs sels,
- de l'eau résiduelle,
**caractérisé en ce que** le rapport en poids de la matière grasse de qualité alimentaire à l'eau est de 5/1 à 3/1.

2. Produit alimentaire selon la revendication 1, dans lequel il est prévu de 40% à 65% en poids de la protéine du concentré protéique d'origine animale ou végétale.

3. Produit alimentaire selon l'une des revendications 1 et 2, **caractérisé en ce que** l' additif texturant de qualité alimentaire est de l'amidon modifié.

4. Produit alimentaire selon l'une des revendications 1 à 3, **caractérisé en ce qu'**il comprend de 0,2% à 10% en poids de l'additif texturant de qualité alimentaire.

5. Produit alimentaire selon l'une des revendications 1 à 4, **caractérisé en ce qu'**il comprend un sel de qualité alimentaire dérivé d'un agent acidifiant, autre qu'un citrate ou phosphate.

6. Produit alimentaire selon la revendication 5, **caractérisé en ce qu'**il comprend de 0,2 à 4% en poids de sel de qualité alimentaire dérivé d'un agent acidifiant.

7. Produit alimentaire selon l'une des revendications 1 à 4, **caractérisé en ce qu'**il comprend un additif protéolytique ou son produit d'hydrolyse.

8. Produit alimentaire selon la revendication 7, dans lequel l'additif protéolytique est une protéase spécifique de la protéine présente dans le concentré d'origine animale ou végétale, ou un produit d'hydrolyse de celle-ci.

9. Produit alimentaire expansé sec selon la revendication 7, dans lequel l'additif protéolytique est une enzyme d'origine animale, végétale ou microbienne, ou un produit d'hydrolyse de celle-ci.

10. Produit alimentaire expansé sec selon l'une des revendications 7 à 9, dans lequel le concentré de protéine animale de qualité alimentaire est un concentré de protéine de lait, la matière grasse de qualité alimentaire est de la matière grasse laitière anhydre, et l'additif protéolytique est de la présure ou une protéase telle que la chymosine.

11. Produit alimentaire selon l'une des revendications 7 à 9, dans lequel le concentré de protéine végétale de qualité alimentaire est un concentré de protéine de soja, et l'additif protéolytique est une protéase spécifique de la protéine de soja ou un produit d'hydrolyse de celle-ci, ou un sel d'agent acidifiant.

12. Produit alimentaire selon l'une des revendications 1 à 11, dans lequel la teneur en eau résiduelle est d'au moins 3% en poids et inférieure à 10% en poids.

13. Un précurseur thermo-expansible capable de former un produit alimentaire expansé sec selon l'une quelconque des revendications 1 à 12, comprenant au moins les ingrédients suivants:
- un concentré protéique d'origine animale ou végétale, de qualité alimentaire,
- une matière grasse de qualité alimentaire,
- un additif texturant de qualité alimentaire choisi parmi le groupe constitué des hydrocolloïdes et gélifiants végétaux, l'amidon de préférence modifié, les additifs protéolytiques et leurs produits d'hydrolyse, et les agents acidifiants et leurs sels, et
- de l'eau.

14. Un procédé de préparation d'un précurseur thermo-expansible selon la revendication 13, comprenant les étapes consistant à:
- combiner, à une température comprise entre 4°C et 60°C, le concentré protéique d'origine animale ou végétale, la matière grasse de qualité alimentaire, l'additif texturant de qualité alimentaire et l'eau,
- soumettre le mélange obtenu à un traitement thermique à une température comprise entre 65°C et 140°C, et
- le cas échéant ajouter un agent acidifiant ou l'un de ses sels de qualité alimentaire, et/ou un additif protéolytique ou un produit d'hydrolyse de celui-ci.

15. Procédé de fabrication d'un produit alimentaire expansé sec selon l'une des revendications 1 à 12, comprenant les étapes du procédé de préparation de la revendication 14, et comprenant en outre l'étape consistant à soumettre le précurseur thermo-expansible à la chaleur pour provoquer son expansion et la réduction de la teneur en eau jusqu'à la teneur résiduelle.

## Patentansprüche

1. Expandiertes trockenes Lebensmittelprodukt, umfassend mindestens die folgenden Inhaltsstoffe:
- ein tierisches oder pflanzliches Proteinkonzentrat in Lebensmittelqualität,
- ein Fett in Lebensmittelqualität,
- einen texturierenden Zusatzstoff in Lebensmittelqualität, ausgewählt aus der Gruppe, die von den pflanzlichen Hydrokolloiden und Geliermitteln, der vorzugsweise modifizierten Stärke, den proteolytischen Zusatzstoffen und ihren Hydrolyseprodukten und den Säuerungsmitteln und ihren Salzen gebildet ist,
- Restwasser,
**dadurch gekennzeichnet, dass** das Gewichtsverhältnis des Fetts in Lebensmittelqualität zu Wasser 5/1 bis 3/1 beträgt.

2. Lebensmittelprodukt nach Anspruch 1, wobei 40 bis 65 Gew.-% des Proteins des tierischen oder pflanzlichen Proteinkonzentrats vorgesehen sind.

3. Lebensmittelprodukt nach einem der Ansprüche 1 und 2, **dadurch gekennzeichnet, dass** der texturierende Zusatzstoff in Lebensmittelqualität modifizierte Stärke ist.

4. Lebensmittelprodukt nach einem der Ansprüche 1 bis 3, **dadurch gekennzeichnet, dass** es 0,2 bis 10 Gew.-% des texturierenden Zusatzstoffs in Lebensmittelqualität umfasst.

5. Lebensmittelprodukt nach einem der Ansprüche 1 bis 4, **dadurch gekennzeichnet, dass** es ein Salz in Lebensmittelqualität als Derivat eines Säuerungsmittels umfasst, das kein Citrat oder Phosphat ist.

6. Lebensmittelprodukt nach Anspruch 5, **dadurch gekennzeichnet, dass** es 0,2 bis 4 Gew.-% Salz in Lebensmittelqualität als Derivat eines Säuerungsmittels umfasst.

7. Lebensmittelprodukt nach einem der Ansprüche 1 bis 4, **dadurch gekennzeichnet, dass** es einen proteolytischen Zusatzstoff oder sein Hydrolyseprodukt umfasst.

8. Lebensmittelprodukt nach Anspruch 7, wobei der proteolytische Zusatzstoff eine spezifische Protease des in dem tierischen oder pflanzlichen Konzentrat enthaltenen Proteins oder ein Hydrolyseprodukt derselben ist.

9. Expandiertes trockenes Lebensmittelprodukt nach Anspruch 7, wobei der proteolytische Zusatzstoff ein tierisches, pflanzliches oder Mikrobenenzym oder ein Hydrolyseprodukt desselben ist.

10. Expandiertes trockenes Lebensmittelprodukt nach einem der Ansprüche 7 bis 9, wobei das tierische Proteinkonzentrat in Lebensmittelqualität ein Milchproteinkonzentrat ist, das Fett in Lebensmittelqualität wasserfreies Milchfett ist und der proteolytische Zusatzstoff Lab oder eine Protease wie das Chymosin ist.

11. Lebensmittelprodukt nach einem der Ansprüche 7 bis 9, wobei das pflanzliche Proteinkonzentrat in Lebensmittelqualität ein Sojaproteinkonzentrat ist und der proteolytische Zusatzstoff eine spezifische Protease des Sojaproteins oder ein Hydrolyseprodukt desselben oder ein Salz eines Säuerungsmittels ist.

12. Lebensmittelprodukt nach einem der Ansprüche 1 bis 11, wobei der Gehalt an Restwasser mindestens 3 Gew.-% und unter 10 Gew.-% beträgt.

13. Ein thermisch expandierbarer Vorläufer, der imstande ist, ein expandiertes trockenes Lebensmittelprodukt nach einem der Ansprüche 1 bis 12 zu bilden, umfassend mindestens die folgenden Inhaltsstoffe:
- ein tierisches oder pflanzliches Proteinkonzentrat in Lebensmittelqualität,
- ein Fett in Lebensmittelqualität,
- einen texturierenden Zusatzstoff in Lebensmittelqualität, ausgewählt aus der Gruppe, die von den pflanzlichen Hydrokolloiden und Geliermitteln, der vorzugsweise modifizierten Stärke, den proteolytischen Zusatzstoffen und ihren Hydrolyseprodukten und den Säuerungsmitteln und ihren Salzen gebildet ist, und
- Wasser.

14. Ein Verfahren zur Herstellung eines thermisch expandierbaren Vorläufers nach Anspruch 13, umfassend die Schritte, die darin bestehen:
- Kombinieren, bei einer Temperatur zwischen 4 °C und 60 °C, des tierischen oder pflanzlichen Proteinkonzentrats, des Fetts in Lebensmittelqualität, des texturierenden Zusatzstoffs in Lebensmittelqualität und des Wassers,
- Aussetzen des erhaltenen Gemischs einer thermischen Behandlung bei einer Temperatur zwischen 65 °C und 140 °C, und
- gegebenenfalls Hinzufügen eines Säuerungsmittels oder eines seiner Salze in Lebensmittelqualität und/oder eines proteolytischen Zusatzstoffs oder eines Hydrolyseprodukts desselben.

15. Herstellungsverfahren eines expandierten trockenen Lebensmittelprodukts nach einem der Ansprüche 1 bis 12, umfassend die Schritte des Herstellungsverfahrens nach Anspruch 14 und umfassend ferner den Schritt, der darin besteht, den thermisch expandierbaren Vorläufer Wärme auszusetzen, um seine Expansion und die Reduzierung des Wassergehalts bis zum Restgehalt zu bewirken.

## Claims

1. A dry expanded food product comprising at least the following ingredients:
- a food grade animal or plant protein concentrate,
- a food grade fat,
- a food grade texturizing additive selected from the group consisting of plant hydrocolloids and gelling agents, preferably modified starch, proteolytic additives and their hydrolysis products, and acidifying agents and their salts,
- residual water,
**characterized in that** the weight ratio of food grade fat to water is from 5/1 to 3/1.

2. The food product according to claim 1, wherein from 40% to 65% by weight of the protein of the animal or plant protein concentrate are provided.

3. The food product according to one of claims 1 to 2, **characterized in that** the food-grade texturizing additive is modified starch.

4. The food product according to one of claims 1 to 3, **characterized in that** it comprises from 0.2% to 10% by weight of the food grade texturizing additive.

5. The food product according to one of claims 1 to 4, **characterized in that** it comprises a food grade salt derived from an acidifying agent, other than citrate or phosphate.

6. The food product according to claim 5, **characterized in that** it comprises from 0.2 to 4% by weight of the food grade salt derived from an acidifying agent.

7. The food product according to one of claims 1 to 4, **characterized in that** it comprises a proteolytic additive or its hydrolysis product.

8. The food product according to claim 7, wherein the proteolytic additive is a protease specific to the protein present in the animal or plant concentrate, or a hydrolysis product thereof.

9. The dry expanded food product according to claim 7, wherein the proteolytic additive is an animal, plant or microbial enzyme, or a hydrolysis product thereof.

10. The dry expanded food product according to one of claims 7 to 9, wherein the food grade animal protein concentrate is a milk protein concentrate, the food grade fat is anhydrous milk fat, and the proteolytic additive is rennet or a protease such as chymosin.

11. The food product according to one of claims 7 to 9, wherein the food grade plant protein concentrate is a soy protein concentrate, and the proteolytic additive is a soy protein-specific protease or a hydrolysis product thereof, or an acidifying agent salt.

12. The food product according to one of claims 1 to 11, wherein the residual water content is at least 3% by weight and lower than 10% by weight.

13. A heat-expandable precursor able to form a dry expanded food product according to any of claims 1 to 12, comprising at least the following ingredients:
- a food grade animal or plant protein concentrate,
- a food grade fat,
- a food grade texturizing additive selected from the group consisting of plant hydrocolloids and gelling agents, preferably modified starch, proteolytic additives and their hydrolysis products, and acidifying agents and their salts,
- water.

14. A method for preparing a heat expandable precursor according to claim 13, comprising the steps of:
- combining, at a temperature comprised between 4°C and 60°C, the animal or plant protein concentrate, the food grade fat, the food grade texturizing additive and water,
- subjecting the obtained mixture to a heat treatment at a temperature between 65°C and 140°C, and
- optionally adding an acidifying agent or one of its food grade salts, and/or a proteolytic additive or a hydrolysis product thereof.

15. A method for manufacturing a dry expanded food product according to one of claims 1 to 12, comprising the steps of the preparing method of claim 14, and further comprising the step of subjecting the heat expandable precursor to heat to cause it to expand and reducing the water content down to the residual content.
